# EUROPEAN PATENT APPLICATION

(11) **EP 4 653 680 A1**
(43) Date of publication of application: **26.11.2025**
(21) Application number: 25174953.7
(22) Date of filing: 08.05.2025
(51) Int. Cl.: F02C 1/02, F02C 1/08, F02C 3/36, F25B 27/02

(54) **OPEN BRAYTON TYPE REVERSE CYCLE FOR THERMAL RECOVERY**

(30) Priority: 09.05.2024 IT 202400010468
(71) Applicant: SIT Technologies S.r.l., 16121 Genova (IT)
(72) Inventor: Barberis, Stefano, GENOVA (IT); Marelli, Silvia, GENOVA (IT); Patti, Alberto, GENOVA (IT); Silvestri, Paolo, GENOVA (IT); Traverso, Alberto, GENOVA (IT); Usai, Vittorio, GENOVA (IT)
(74) Representative: Karaghiosoff, Giorgio Alessandro

(57) **Abstract**

The invention relates to a system for thermal recovery from gaseous effluents operating in an open cycle, using said gaseous effluents as a working fluid and comprising a compression section, comprising at least one compressor (11) preferably driven by an electric motor (10), said compressor sucking gaseous effluents from a stream of hot residual gases and compressing the same effluents with consequent rise in temperature of said compressed gaseous effluents, a heat transfer section, comprising a secondary heat recovery circuit and a heat exchanger (13) for the thermal transfer to a carrier fluid (7), circulating in said secondary circuit, of thermal energy taken from said compressed gaseous effluents and for the consequent cooling of the same, an expansion section, comprising at least one expander (14) for a further recovery of energy released by expansion and converted into mechanical or electrical form after cooling by said heat exchanger (13), a discharge section (60) for the discharge of at least part of said gaseous effluents.

The invention also has as its object a method of recovering part of the energy contained in the form of heat in gaseous effluents through a plant operating in an open cycle.

## Description

### TECHNICAL FIELD

The present invention refers to the sector of inverse cycles for waste heat recovery, typically available at low temperatures, in order to elevate the temperature level of such waste heat. In the panorama of inverse cycles, used both as refrigeration cycles and as heat pumps, the present invention refers to an innovative configuration of a Brayton-type reverse cycle operating with working fluids in the gaseous state with ideal or semi-ideal gas behavior. In the case of heat recovery through traditional high-temperature heat pumps (supply temperature >100°C), using refrigerant fluids in a closed cycle with fluid state change in two heat exchangers, called evaporator and condenser, respectively, the heat supply to the thermal user, consisting of the cooling fluid of the condenser or thermal sink, applications are limited by the availability of refrigerants suitable for high temperatures, since above 150°C condenser temperatures there are no effective commercial solutions.

For this reason, in the high-temperature heat pump applications, the so-called reverse Brayton cycles are being developed, which are typically made up of closed circuits in which the gaseous working fluid is processed. However, such solutions are affected by system complexity, due to the presence of at least two heat exchangers (corresponding the conventional evaporator and condenser) of considerable size due to the poor heat exchange properties of the gaseous working fluid, by exergy degradation of the low-temperature heat source, and by poor time response to variations in heat demand.

The invention solves these problems by presenting a new reverse cycle, called open reverse Brayton cycle (recalling the open direct Brayton cycle normally used to produce power in gas turbine applications), which, in its essential form, comprises at least one operating machine, or compressor, at least one driving machine, or expander, and a heat exchanger on the high-temperature thermal user side (equivalent to the condenser of a traditional heat pump with refrigerant fluid operating with phase change), allowing for system simplification, cost reduction and increased performance compared to similar systems operating in a closed cycle. Additional specific exchangers for the exchange of heat inside the working fluid in different sections of the circuit can be optionally provided as executive variants of the system that still operates in an open cycle by releasing at least part of the working fluid outside the working circuit.

The driving/operating machines are preferably of dynamic type but the invention can also work with volumetric type machines or a combination of machines of different types.

In particular, by operating through an open reverse Brayton cycle for the recovery of energy contained in an exhaust gas such as in the case of boiler exhaust effluents and using as a working fluid the same exhaust gas from which it is intended to recover heat that would otherwise be lost, the invention reduces the number of heat exchangers necessary for an equivalent closed reverse Brayton cycle, while still allowing heat recovery and supply of high temperature heat (>150°C) to a secondary recovery circuit, through the direct processing of the lower heat source, when it is in the gaseous state. The reduction in number of heat exchangers results from the removal of the recycling part of the working gas from the expander to the compressor, i.e. the use of an open cycle instead of a closed cycle.

The invention finds preferred and advantageous but not limited application in the sector of energy recovery from thermal waste (especially from exhaust gases and gaseous heat sources), from renewable thermal sources (e.g. geothermal, solar thermal), in the manufacturing, process, power generation industry, or in other sectors requiring heating of fluids/processes/components in the production line, or even in the thermal production for district heating networks.

### STATE OF THE ART

In the state of the art, there are known solutions for energy recovery from heat waste through reverse closed-cycle systems, also called heat pumps, operating with working fluids typically with fluid phase change.

In the industrial context, high temperature heat pumps (HTHP) represent the most promising sustainable solution for producing process heat, allowing the replacement of natural gas or other fossil fuel boilers with low-emission electric systems. Furthermore, increasing the temperature level of the heat produced by current technologies based on renewable sources (e.g. solar thermal panels) or waste heat to the temperature levels required by the processing industries (typically above 150 °C [A][B]) represents a technological challenge for HTHPs.

Currently, heat pumps available on the market can reach temperatures up to 160 °C [C], with the exception of rare examples of HTHPs with higher discharge temperatures (160 - 280 °C) [D], typically using water as the working fluid. However, most commercial industrial heat pumps use a vapour compression cycle employing, for example, hydrofluoroolefins (HFO), hydrofluorocarbons (HFC) or natural refrigerants as working media, supplying or dissipating heat at temperatures always below 160 °C.

Reverse cycles with water as the working fluid have been studied [E][F] for their ability to reach high temperatures, but they are characterized by complex plant configurations and the need for innovative components, such as compressors that can handle the high specific work required to compress water vapor.

Alternatively, heat pumps based on reverse Brayton cycles that use semi-ideal gases such as air, nitrogen, helium, argon, carbon dioxide, in conditions not excessively far from ambient ones, represent an attractive alternative, since they have the potential to reach temperatures significantly higher than 160 °C with a relatively less complex plant configuration than vapor compression heat pumps, using already existing and commercially available components [G].

For this reason, although previous investigations on environmental cooling applications have shown non-competitive performance compared to organic refrigerants in terms of coefficient of performance (COP), the reversed Brayton cycle has significant development potential and could prove competitive for high-temperature applications [H][I], especially in the industrial sector.

On the other hand, some industrial applications require to supply heat to a fluid in the form of sensible heat, therefore, with a significant temperature increase. This need can be efficiently satisfied with a reverse Brayton cycle in which also the working fluid exchanges sensible heat.

Instead, in the case of vapor compression heat pumps, which exchange heat mainly of the latent type at constant temperature, the aforementioned industrial needs cause exergy irreversibility in the heat exchangers, since the exchangers have to transfer heat mainly between a fluid at constant temperature, on one side, and at variable temperature on the other.

All existing studies on HTHP based on the reverse Brayton cycle, including those regarding the study of different plant configurations [J], dynamic modelling [K] and control strategy [L], have focused on the closed reverse Brayton cycle, where the working fluid typically in the gaseous state runs in a closed circuit and is not changed during normal operation of the heat pump. The present invention concerns the introduction, for the first time, of an open reverse Brayton cycle configuration, i.e. with continuous exchange of at least a part of the working fluid. The open reverse Brayton cycle, which uses, by way of example and not limitation, ambient air or exhaust gas in waste heat recovery applications or a mixture of the same in variable and known proportions, is a promising solution to improve performance and flexibility in waste heat recovery, while reducing capital costs, by simplifying the plant layout, and the exergy degradation of the heat source, by eliminating the low temperature heat exchanger.

Finally, in an energy context with increasing integration of non-programmable renewable sources, both in the thermal market and in the electricity market, the open reverse Brayton cycle allows a faster modulation of the electrical and thermal load than conventional heat pump solutions, thanks to the elimination of at least one of the two heat exchangers, typically the one at the cold source, thus being able to provide energy flexibility services according to the scheme known as demand-response [M].

prior art presents several cases in which closed reverse Brayton cycles are used in cryogenic applications, by way of example and not limitation in the liquefaction of natural gas. In such applications the working fluid, although being a technical gas such as nitrogen, argon, helium, carbon dioxide, etc., is very far from ambient conditions and therefore shows the behavior of a real gas, bringing to complex design of components. Furthermore, in such devices, attention has always been paid to the useful effect on the cold side of the reverse cycle, or heat source, while little attention has typically been paid to the hot side of the reverse cycle, or heat sink.

Among the known state-of-the-art configurations, in [N] a closed reverse Brayton cycle is presented for the refrigeration of electrical machines using superconductors. Such superconductors must be maintained at a temperature of 30K, obtained by the closed reverse Brayton cycle with working fluids such as helium.

Among the known state-of-the-art devices, in [O] an innovative closed reverse Brayton cycle configuration is described for refrigeration and cryogenic applications, allowing to obtain high performance at partial loads of cooling power demand (heat source). On the other hand, the reverse Brayton cycle is of the closed type and the advantages or disadvantages that could be obtained on the hot side (heat sink) are not discussed.

Among the known solutions for air conditioning, [P] describes an innovative configuration based on the Brayton cycle using bladeless or Tesla type turbomachinery for air conditioning in the passenger compartment of a motor vehicle. On the other hand, this cycle uses the waste heat available from the exhaust of an engine to obtain mechanical work aimed at refrigerating the ambient air and cannot be used to raise the thermal level of said waste heat, like as in the present invention. Again in [P], in fact, the turbocharger is driven by the engine exhaust gases, thus recovering part of the energy of the gases to compress the ambient air intended for the passenger compartment, as common practice in turbocharger systems; the compressed ambient air is then sent to an intercooler, where it is cooled, and subsequently to another bladeless turbine, used as an expander, where the air is further cooled during the expansion and is then directed inside the passenger compartment. However, there is no way in which the heat from the engine exhaust gases can be transferred to the passenger compartment.

Excess energy can be recovered by an alternator coupled to the expander turbine and, for simplicity, the system does not use chemical refrigerants and is designed to directly treat the air that will then be breathed by passengers. A heat exchanger is also provided between the already cooled air (outgoing) and the air to be cooled (incoming) to optimize the compression process of the relatively warmer air entering the compressor.

Both the exhaust gases 314, with their residual heat content from the expansion in the turbine 308, and the energy in the form of heat 114 extracted to cool the ambient air, are therefore dispersed into the environment.

The use of reverse Brayton cycles for heat pump applications, where the heat source is used to raise the temperature level of the heat at the thermal sink, which is the useful effect of the system, has been poorly studied in the technical literature. Only recently, some authors [J] have addressed the topic, however presenting closed reverse Brayton cycle configurations, which require the use of a multiplicity of heat exchangers of considerable size, since they are of the gas-gas type, thus resulting in a significant plant complexity.

Known documents that address the topic of closed Brayton cycles are US10422250B2, which describes an energy storage system converting electrical energy into heat (in the charging phase) and heat into electricity (in the discharging phase) using working fluids in direct and inverse closed thermodynamic cycles, and US7466045 (cryogenic cooling systems for dynamoelectric machines). All these documents are therefore focused on the use and improvement of closed cycles with specific gases that are recirculated in a primary closed circuit as commonly known in this type of applications.

Document CA2149192A1 also refers to a closed dry gas thermodynamic cycle (without phase change) in which, for environmental reasons, air, nitrogen or nitrogen-enriched air is used to operate a cooling system. To compensate for the low yield of air as a working fluid, the system includes multiple heat exchangers for cooling both a cold room and, secondarily, pre-cooling the working fluid before the compression phase. Although the system includes a filling/refilling section to compensate for any working fluid loss, the system implements a traditional closed reverse Brayton cycle..

In fact, all these technologies require at least two heat exchangers inevitably linked to closed cycle operation in which a first exchanger transfers heat from a thermal source to a working fluid and a second exchanger operates in the opposite way to a thermal sink, lowering the temperature of said working fluid.

A well-known case in technical literature of an open cycle for thermal recovery is that of the mechanical recompression of water vapor, in which the thermal characteristics of the working fluid are raised in pressure and temperature through the use of operating machines [Q]: water vapor with intermediate characteristics is recovered and compressed by means of adiabatic compressors and sent to an user of direct steam. However, this solution is applied only to water vapor and does not provide for the recovery of mechanical energy through expanders.

Here below the bibliographic references of the prior art are listed:
[A] Naegler T, Simon S, Klein M, Gils HC. Quantification of the European industrial heat demand by branch and temperature level. 2015. Int. J. Energy Res., 39: 2019-2030. doi: 10.1002/er.3436.
[B] IEA. Industrial heat demand by temperature range. 2018, Paris.
[C] Arpagaus C, Bless F, Uhlmann M, Schiffmann J, Bertsch SS. High temperature heat pumps: Market overview, state of the art, research status, refrigerants, and application potentials. Energy, 2018, Volume 152, Pages 985-1010, ISSN 0360-5442, https://doi.org/10.1016/j.energy.2018.03.166.
[D] Arpagaus C, Bless F, Bertsch S, Krummenacher P, Flórez-Orrego DA, Pina EA, Maréchal F, Darbellay NC, Rognon F, Vesin S, Achermann P, Jansen C. Integration of High-Temperature Heat Pumps in Swiss Industrial Processes (HTHP-CH), 14th IEA Heat Pump Conference 15-18 May 2023, Chicago, Illinois.
[E] Bergamini R, Jensen JK, Elmegaard B. Thermodynamic competitiveness of high temperature vapor compression heat pumps for boiler substitution. 2019. Energy, 182 110-121.
[F] Hegner R, Khass OA, Moller C, Stathopoulos P. High Temperature Heat Pump Cascade Systems with Water (R718) as Refrigerant. ASME Paper GT2022-82920, June 13-17, 2022. Rotterdam, The Netherlands
[G] Zühlsdorf B, Bühler F, Bantle M, Elmegaard B. Analysis of technologies and potentials for heat pump-based process heat supply above 150 °C. 2019. Energy Conversion and Management: X Vol. 2: p. 100011, doi 10.1016/j.ecmx.2019.100011.
[H] Wang S, Li S, Jiang S, Wu X. Analysis of the Air-Reversed Brayton Heat Pump with Different Layouts of Turbochargers for Space Heating. 2022. Buildings, 12, 870, https://doi.org/10.3390/buildings12070870
[I] Angelino G, Invernizzi C. Prospects for real-gas reversed Brayton cycle heat pumps. 1995. Int. J. Refrig. Vol. 18, No. 4, pp. 272 280.
[J] Kabat N, Jende E, Nicke E, Stathopoulos P. Investigation on process architectures for high-temperature heat pumps based on a reversed Brayton cycle. ASME Paper GT2023-102497, June 26-30, 2023. Boston, Massachusetts, USA.
[K] Pettinari M, Frate GF, Kyprianidis K, Ferrari L. Dynamic modelling and part-load behavior of a Brayton heat pump. Västerås, Sweden, September 26-27, 2023.
[L] Pettinari M, Frate GF, Tran AP, Oehler J, Stathopoulos P, Kyprianidis K, Ferrari L. Impact of the Regulation Strategy on the Transient Behavior of a Brayton Heat Pump. Energies. 2024; 17(5):1020. https://doi.org/10.3390/en17051020.
[M] Bradley P, Leach M, Torriti J. A review of the costs and benefits of demand response for electricity in the UK. Energy Policy, Volume 52. 2013; pages 312-327, ISSN 0301-4215. https://doi.org/10.1016/j.enpol.2012.09.039.
[N] In-Shaft Reverse Brayton Cycle Cryo-Cooler, US patent 7466,045 B2
[O] Brayton Cycle Refrigerating Apparatus, European patent EP3153795B1
[P] Reverse Brayton Cycle with Bladelessturbo Compressor for Automotive Environmental Cooling, US patent 9464638B2
[Q] R. Lazzarin, 2023, Mechanical Vapour Recompression (MVR): a review of applications and a comparison with Thermal Vapour Recompression (TVR), Proceedings of the 26th IIR International Congress of Refrigeration: Paris , France, August 21-25, 2023.

### PURPOSE OF THE INVENTION

The purpose of the present invention is to overcome the drawbacks of the prior art. In particular, the purpose of the present invention is to implement in a single plant operating in a reverse Brayton cycle:
(i) heat recovery from a gaseous source at a low average temperature by direct suction of gaseous effluents;
(ii) increase the temperature level of said heat which is released to a thermal user, or thermal sink, at a high average temperature;
(iii) implement such thermal recovery by using a single heat exchanger, on the thermal user side;
(iv) provide part of the mechanical or electrical power required for at least one compressor of said reverse Brayton cycle by means of at least one electric motor;
(v) reduce the number of components required by the plant and therefore the overall dimensions of the plant itself.

It is also purpose of the present invention to realize said thermal recovery from exhaust gases or waste gaseous effluents, typically discharged into the environment, in order to release them into the environment at a lower temperature than the initial one, with possible condensation of part of the humidity contained therein.

It is also purpose of the present invention to reduce the consumption of mechanical or electrical power absorbed preferably through the use of an expander downstream of the thermal sink at high temperature.

It is also purpose of the present invention to allow the direct use of the mechanical power recovered from said expander in a mechanically integrated compressor, in order to be able to implement electro/mechanical configurations similar to the turbo-supercharging of internal combustion engines.

It is also a further purpose of the present invention to exploit the advantages deriving from the adoption of components with technological solutions close to the state of the art to allow a high economic competitiveness of the system compared to conventional solutions. In fact, the compressor intake, being at pressure conditions close to atmospheric, allows to avoid the use of custom-designed devices, unlike what happens in the construction of closed Brayton cycle systems which, being pressurized, require ad hoc designed solutions to obtain satisfactory performance and to increase the compactness of the system.

Furthermore, the invention provides a system that can also operate discontinuously, for example on-demand basing on the needs of the electricity grid or energy availability from renewable sources. In fact, heat pumps operating in a closed cycle have more stringent constraints in terms of load ramps, due to refrigerant accumulation in the system, thermal stress on heat exchangers, compressor instability problems, while the use of a disposable working fluid and the presence of a single heat exchanger allows much more rapid load ramps and shutdowns. To further improve performance in this sense, the invention can also include at least one vent in the circuit, preferably downstream of the compressor, to allow fast transients in the start-up and shutdown cycles or during thermal load regulation.

It is also a further object of the present invention to create heat recovery systems using as working fluid at least one hot gaseous fluid such as air, nitrogen, helium, argon, carbon dioxide, combustion exhausts, drying process exhausts, water vapor or mixtures of these, in pressure conditions close to ambient, so that it behaves as an ideal or semi-ideal gas, allowing the use of simplified approaches in the design of the components.

These and further objects of the present invention are achieved by means of an open-type reverse Brayton cycle and the related regulation method according to the characteristics of the attached claims, which form an integral part of this description.

The general idea underlying the present invention involves the creation of an open Brayton cycle operating with a working fluid taken from the outside at a relatively low temperature, preferably waste fluid as in the case of combustion exhausts or effluents from drying processes, for heat recovery at a relatively higher temperature and the consequent benefit in terms of energy efficiency due to operation as a high-temperature heat pump. The implementation of the idea in the claimed system therefore allows the main purposes of the invention to be achieved, including the recovery of thermal energy contained in high-temperature exhaust gases by transferring it to a carrier fluid in a secondary circuit which is consequently heated, and thanks to which carrier fluid such energy is made available for subsequent reuse rather than being dispersed in the environment. This has the advantages, among others, of increasing the efficiency of civil and/or industrial systems and reducing thermal pollution of the environment.

Said open Brayton cycle can be realized by means of a system that comprises:
(i) an optional mixing section (1) of the suction effluents at approximately ambient pressure (1A, 1B) aimed at controlling a compressor inlet temperature (2);
(ii) at least one compression section, for example a compressor (11, 12) for the compression of said effluents at higher pressure;
(iii) a heat transfer section, comprising a heat exchanger (13) for the high temperature heat recovery and cooling of said compressed effluents;
(iv) an expansion section, for example at least one expander down to approximately the initial pressure of the effluents (14);
(v) a discharge section (60) to which said effluents are released at a lower temperature than the initial one (1A);
(vi) an electric motor (10) mechanically connected to at least one compressor (11) for starting the Brayton cycle and regulating it.

Said reverse Brayton cycle is characterized by the fact that it is open, since the working fluid processed by the compressor and the expander is continuously renewed and released at the discharge.

This solution offers the advantage of eliminating the need for a heat exchanger in the low temperature source, consisting of said effluents (1A), thus reducing both the irreversibility of heat exchange at the source as well as the complexity of the system and related capital cost.

According to an advantageous embodiment, in the open cycle described above, the reverse Brayton cycle is achieved by a system comprising at least two compressors in series, where at least one (11) is driven by said electric motor (10) while at least one other (12) is mechanically connected to the expander (14), so as to increase the compression and flow rate of the intake effluents (1A) and at the same time reduce the consumption of electric power to the motor (10), since part of the work required for the operation of the compression section is provided by the expander to the compressor mechanically connected to it. This allows further power to be extracted from the gases previously cooled but still sufficiently hot to be able to produce mechanical work in the expander to be reused internally in the system.

According to an advantageous embodiment, in the open cycle described above, the reverse Brayton cycle is realized by a system that comprises at least two compressors in parallel, each driven by an electric motor, allowing for more efficient regulation of operation. This is particularly advantageous when used in combination with the previously described configuration of mechanical connection between the expander and one of the compressors, which is very efficient but less easily adjustable.

According to an advantageous embodiment, in the open cycle described above, the compression section and/or the expansion section comprises at least one relief valve to the environment in order to avoid overpressure during start-up, shutdown or load regulation of the system.

Further advantageous features are the subject of the attached claims, which are intended to be an integral part of this description.

### BRIEF DESCRIPTION OF THE DRAWINGS

The invention will be described hereinafter with reference to non-limiting examples, provided for explanatory and non-limiting purposes in the accompanying drawings. These drawings illustrate different aspects and embodiments of the invention and, where appropriate, reference numerals illustrating similar structures, components, materials and/or elements in different figures are indicated by similar reference numerals.
In the accompanying figures:
Figure 1 illustrates a plant layout of the open reverse Brayton cycle;
Figure 2 illustrates a possible nominal operating point of the open reverse Brayton cycle.

### DETAILED DESCRIPTION OF THE INVENTION

While the invention is susceptible to various modifications and alternative constructions, certain preferred embodiments are shown in the drawings and will be described in detail hereinafter.

It is to be understood, however, that there is no intention to limit the invention to the specific embodiment illustrated, but, on the contrary, it is intended to cover all modifications, alternative constructions, and equivalents that fall within the scope of the invention as defined in the claims.

The use of "e.g.," "etc.," "or" indicates non-exclusive alternatives without limitation unless otherwise indicated.

The use of "includes" means "includes, but is not limited to," unless otherwise indicated.

Indications such as "vertical" and "horizontal", "upper" and "lower" (in the absence of other indications) must be read with reference to the assembly (or operating) conditions and referring to the normal terminology in use in everyday language, where "vertical" indicates a direction substantially parallel to that of the gravitational force vector "g" and horizontal a direction perpendicular to it.

The term "thermal source" refers to any gaseous flow, including heat from combustion exhausts, waste heat or from a renewable source.

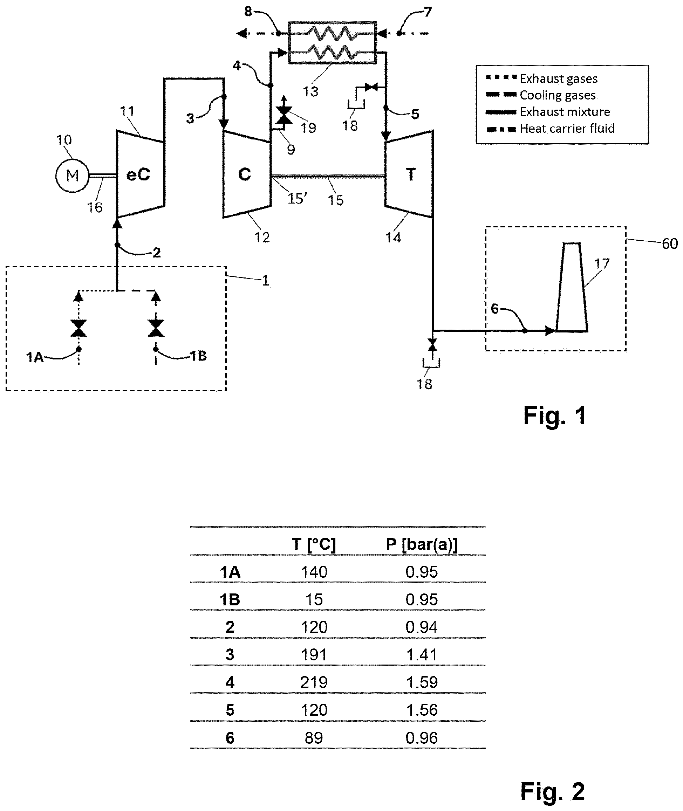

The invention presented here consists of a system for creating a new cycle (Fig. 1) for the direct recovery of heat from a low average temperature thermal source, typically consisting of combustion exhaust or waste gaseous effluents (hereinafter "effluents"), and the raising of its thermal level to a higher average temperature, usable by a thermal user preferably through a heat exchanger.

The objective of said system to create an open reverse Brayton cycle is typical of a high-temperature heat pump, which has the useful effect of increasing the temperature at which the heat available in the gaseous effluents is made available, at the expense of a limited consumption of mechanical or electrical energy for the movement of at least one compressor.

Said system to create an open reverse Brayton cycle is characterized by the direct suction of said effluents, which constitute the working fluid processed by the machines, consisting of at least one compressor and at least one expander.

With reference to Fig. 1, the effluents are collected under pressure conditions close to the ambient and a discharge temperature typical of combustion exhausts in the environment (1A), for example greater than 100°C. In a mixing section (1), such effluents can be partially mixed with another flow of gaseous effluents (1B), for example air, at a different temperature, so as to regulate the temperature resulting from their mixture (2). Mixing with air and/or another fluid is a feature to be considered optional, although preferable in the embodiments of the invention.

Said optionally mixed effluents (2) are processed by at least one compressor (11), which has the task of increasing their pressure and at the same time, given the thermodynamic transformation that is approximately an adiabatic one, the temperature. Said at least one compressor (11) is preferably moved by at least one electric motor (10) connected to the same rotating shaft (16).

The partially compressed effluents (3) can be sent to a second compressor (12) which further increases the pressure and temperature of the effluents up to point (4) to maximize the heat recovery to be carried out in the subsequent heat exchanger (13). Said heat exchanger has the task of cooling the compressed effluents by taking heat at a high temperature and making it available to another heat-transfer fluid (7) which is heated for a downstream thermal user (8). Said thermal user will benefit from a part of the heat absorbed by the thermal source at a lower temperature to which a part of the mechanical/electrical power supplied by at least one electric motor (10) will be added.

The outlet (5) of the effluents under pressure and cooled by said heat exchanger is preferably equipped with a condensate separator (18).

Said effluents are then sent to at least one expander (14) for the recovery of mechanical energy through expansion to the initial pressure, typically around ambient pressure. Said expander is preferably connected via a rotating shaft (15) to at least one of the compressors (12), to allow its operation and to reduce the electrical power required by the electric motor (10). The outlet of the expander (6) is preferably equipped with a condensate separator (18) and is finally conveyed to an outlet section, such as an exhaust stack (17). The effluents are finally released into the environment with a lower temperature than that of the inlet temperature into the system (Fig. 2).

With reference to figure 2, it shows an example of a process and in particular of the pressure and temperature conditions of the gaseous effluents at the relevant determination points along the system circuit. The values refer to the specific embodiment of figure 1, however some elements/sections may not be present in other variants that still fall within the scope of the invention as claimed. In particular, the mixing section 1 may not be present when the system is intended to operate with gaseous sources at lower temperatures or of specific chemical compositions.

With reference to figure 2, the mixing section 1 acts in such a way as to maintain a chemical composition and a desired temperature in the range 100-200°C at the inlet of the compressor (2), to avoid corrosion problems to the components and to remain within the operating limits of the compressors, which, if built in aluminum alloys, cannot exceed outlet temperatures higher than 250°C in (3) and (4), typically. On the other hand, the suction temperature (2) and the overall compression ratio achieved by the compressors (11) and (12), typically in the range 1.2-3.5, must be managed jointly in order to obtain an inlet temperature to the heat exchanger (13) higher than the thermal requirements of the user supplied by the secondary circuit, typically in the range 150-200°C, so that the temperature (8) is always higher than the minimum limit required by said user. Finally, the heat exchanger (13) must cool the working fluid as much as possible before entering the turbine (5), typically at temperatures in the range 160-100°C, in order to maximize the system COP and therefore minimize the turbine exhaust temperature (6).

The above-mentioned purposes are thus achieved.

Numerous variations to what has been described so far are possible.

For example, the compression of the effluents from the intake (2) to the inlet of the heat exchanger (4) can be carried out in a single compressor, mounted onto the same rotating shaft (16) as the electric motor (10).

Furthermore, the rotating shaft (16) can be mechanically integral with the rotating shaft (15), according to a mechanical configuration similar to electro-assisted turbo-supercharging.

Furthermore, the expander (14) can be mounted onto a rotating shaft independent of at least one compressor and can move an electric generator for the production of electric power.

Furthermore, the expander (14) can be equipped with variable geometry elements used to regulate its operation.

Furthermore, the compressor (11) can be equipped with variable geometry elements used to regulate its operation.

Furthermore, the compressor (11) can be equipped with relief valves (19) used to allow rapid changes in the load, avoiding overpressure or instability of the compressor itself. Such relief valves can also be installed from a branch (9) along the pressurized lines (3), (4) or (5).

Furthermore, a fraction of the effluent flow rate at the turbine discharge (6) can be recirculated at the compressor (11) inlet mixed with the effluent (2) to control its temperature or composition.

Furthermore, the effluent compression and effluent expansion phases can be carried out in any number of compression and expansion stages, each stage being made up of at least one stator duct and at least one rotor duct.

## Claims

1. Plant for the recovery of heat from gaseous effluents operating in an open cycle, using said gaseous effluents as working fluid and comprising:
- a compression section, comprising at least a first compressor (11) preferably driven by an electric motor (10), said compressor drawing in gaseous effluents from a stream of hot residual gases and operating a compression of the same effluents with consequent raising to a higher temperature of said compressed gaseous effluents;
- a heat transfer section, comprising a secondary heat recovery circuit and a heat exchanger (13) for transferring to a carrier fluid (7), circulating in said secondary circuit, thermal energy withdrawn from said compressed gaseous effluents and for the consequent cooling thereof;
- an expansion section, comprising at least one expander (14) for a further recovery of energy transferred by expansion and converted into mechanical or electrical form by the effluents compressed and cooled by said heat exchanger (13);
- a discharge section (60) for discharging at least part of said gaseous effluents.

2. Plant according to the preceding claim, wherein said compression of the effluents in the compression section is carried out by means of two or more compressors, including said first compressor (11) and at least one second compressor (12), arranged in series with respect to the working fluid path in the plant, wherein at least one of said two or more compressors is driven by said electric motor (10).

3. Plant according to claim 1 or 2, wherein said at least one expander (14) is mechanically connected to said at least one compressor (11; 12), by means of a mechanical connection between a first rotating shaft (15) that moves the impeller of said expander (14) and a second rotating shaft (15', 16) that moves the impeller of said at least one compressor (11, 12).

4. Plant according to claim 3, wherein said electric motor (10) is mechanically connected to said second rotating shaft (16).

5. Plant according to one or more of claims 1 to 4, comprising at least one condensate separator (18) downstream of said at least one heat exchanger (13) and/or downstream of said at least one expander (14) with respect to the working fluid path in the plant.

6. Plant according to one or more of claims 1 to 5, comprising a mixing section (1) from which the effluents in suction to the compressor consist of a mixture of effluents of mutually different composition and/or physical characteristics.

7. Plant according to claim 6, wherein said mixing section (1) is connected to said discharge section (60) in such a way as to draw off at least part of the gaseous effluents exiting from the expansion section and mix them into said mixture of effluents.

8. Plant according to one or more of claims 1 to 7, wherein said expander (14) and/or said compressor (11; 12) are provided with variable geometry elements.

9. Plant according to one or more of claims 1 to 8, wherein pressurized lines connecting said sections and/or the compression section and/or the expansion section comprise at least one vent valve (19) for the expulsion to the environment of part of the gaseous effluents and the consequent reduction of pressure of the same in the plant.

10. Method for recovering part of the energy contained in the form of heat in gaseous effluents comprising the steps of:
- drawing said gaseous effluents from a stream of hot residual gases;
- compressing said drawn gaseous effluents by means of at least one compressor (11; 12), wherein the compression increases both the pressure and the temperature of said drawn gaseous effluents;
- transferring to a secondary user a predetermined part of the thermal energy withdrawn from said compressed gaseous effluents by means of a high-temperature heat exchanger (13), wherein said heat exchanger is the only heat exchanger in the cycle;
- expanding said cooled gaseous effluents through at least one expander (14), recovering residual mechanical energy;
- releasing at least part of said expanded gaseous effluents.

11. Method according to claim 10 further comprising one or more of the following steps:
- using at least part of the mechanical energy recovered from the expander (14) to directly drive at least one compressor (11; 12) or to produce electrical energy, thus improving the energy efficiency of the system and/or
- adjusting the production and operation of the cycle based on the needs of an electrical grid or a renewable energy production source, using a demand-response approach to modulate the thermal and electrical capacity provided and/or
- controlling the operational parameters of said at least one compressor (11; 12) in order to prevent condensation downstream of said heat exchanger (14) and/or
- providing variable geometry elements in the rotor of the expander (14) and/or of said at least one compressor (11; 12) and controlling the configuration of said elements in order to maximize the recovery of mechanical or electrical energy by the expander itself;
- controlling the pressure of the compressed gaseous effluents by dispersing at least part of them in the environment before said expansion phase.

12. Method according to claims 10 or 11, wherein an additional step is provided of controlling the chemical and/or physical characteristics of the gaseous effluents during the suction phase, in particular chemical composition and/or temperature, by mixing the gases of said stream of hot gases with known and predetermined amounts of further gases including ambient air and/or gaseous effluents already subjected to treatment according to the present method.

13. Method according to one or more of the preceding claims from 10 to 12, **characterized in that** it is implemented by means of the plant according to one or more of the preceding claims from 1 to 9.
